# EUROPEAN PATENT APPLICATION

(11) **EP 4 831 337 A1**
(43) Date of publication of application: **28.10.2026**
(21) Application number: 24908083.9
(22) Date of filing: 18.12.2024
(51) Int. Cl.: C22C 38/38, C22C 38/22, C22C 38/32, C22C 38/26, C22C 38/28, C22C 38/00, C21D 8/02

(54) **COLD-ROLLED STEEL SHEET AND METHOD OF MANUFACTURING SAME**

(30) Priority: 18.12.2023 KR 20230184216
(71) Applicant: POSCO Co., Ltd, Gyeongsangbuk-do 37859 (KR)
(72) Inventor: KONG, Jong-Pan, Gwangyang-si, Jeollanam-do 57807 (KR); BANG, Chan-Woo, Gwangyang-si, Jeollanam-do 57807 (KR); HAN, Sang-Ho, Gwangyang-si, Jeollanam-do 57807 (KR); PARK, Man-Young, Gwangyang-si, Jeollanam-do 57807 (KR)
(74) Representative: Meissner Bolte Partnerschaft mbB
(86) International application number: PCT/KR2024/020641
(87) International publication number: WO 2025/135800

(57) **Abstract**

One aspect of the present invention is to provide a cold-rolled steel sheet and a method of manufacturing the same. A preferred aspect of the present invention is to provide an ultra-high strength cold-rolled steel sheet and a method of manufacturing the same, the ultra-high strength cold-rolled steel sheet having a tensile strength of 1470 MPa or higher and also having an excellent shape and excellent phosphate treatability.

## Description

### Technical Field

The present disclosure relates to a cold-rolled steel sheet and a method of manufacturing the same, and more particularly, to a cold-rolled steel sheet suitable for use as a steel material for automobile reinforcing members such as bumper beams and sill side beams, or as a steel material for protecting electric vehicle battery cases such as side frames and cross members, and a method of manufacturing the same.

### Background Art

Steel materials primarily used for reinforcing member components related to the crash safety of automobile passengers are required to have excellent workability characteristics, particularly excellent bendability, as well as ultra-high strength. To this end, research on ultra-high-strength steels having a tensile strength of 1470 MPa or more and using a single martensite phase, as well as methods for manufacturing the same, has been actively conducted.

Recently, a hot press forming (HPF) process has been developed in which a material is formed using a die at a high temperature, which is an environment favorable for forming, and then water-cooled to secure the required strength. Since the HPF process may secure high strength at the same thickness level, the HPF process has been widely used in the manufacture of components. However, the HPF process has disadvantages in that excessive equipment investment and increased process costs are required. Accordingly, there is a need to develop materials for cold stamping and roll forming. That is, there is a need to develop an ultra-high strength cold-rolled steel sheet which is suitable for use as a material for cold stamping and roll forming, has high strength and a high yield ratio to secure crash performance, and exhibits excellent bendability for component forming, spot weldability for component assembly, and corrosion resistance for extending component service life.

Meanwhile, automotive steel sheets are generally subjected to phosphate treatment in advance, followed by electrodeposition coating, in order to secure coating adhesion during a coating process. Phosphate crystals formed during phosphate treatment greatly affect corrosion resistance and coating adhesion after the electrodeposition coating. Since the adhesion to the coating film is excellent when the phosphate crystals are formed to be small and dense, automobile manufacturers have certain standards for the size of phosphate crystals and phosphate coating weight, and commercialization is possible only when such standards are satisfied. Meanwhile, in order to increase the strength of automotive steel sheets for higher strength, it is common to add elements such as Si, Mn, and Cr. However, when steel sheets containing these elements are subjected to pretreatment for coating, these elements form oxides on the surfaces of the steel sheets, thereby causing a problem in that reactivity with phosphate during phosphate treatment is reduced. When the reactivity between the steel sheet and the phosphate is reduced, the phosphate crystals may become coarse, and the phosphate crystals may fail to cover the entire steel sheet. In this case, the coating adhesion and corrosion resistance after the electrodeposition coating may be deteriorated. Therefore, in order to achieve ultra-high strength of 1470 MPa or more and excellent phosphate treatability, the optimization of alloy composition and process conditions is required.

A representative example of the prior art of such a method is disclosed in Patent Document 1. Patent Document 1 relates to a steel containing C: 0.25 to 0.4%, Si: 1.0% or less, Mn: 1.5 to 2.5%, P: 0.02% or less, S: 0.003% or less, Al: 0.01 to 0.1%, N: 0.005% or less, and B: 0.0005 to 0.005%, and further containing Ti: 0.005 to 0.1% and Nb: 0.005 to 0.1% in a total amount of 0.005 to 0.1%, the steel having a single-phase martensitic structure, and discloses that the steel may be obtained by being heated and held in a temperature range of an Ae3 transformation point or higher and 900°C or lower, rapidly cooling the steel to 200°C or lower at an average cooling rate of 300°C/s, and subsequently tempering the steel at 250°C or lower. However, in Patent Document 1, there is a problem in that rapid cooling (water cooling) causes inferior shape characteristics (flatness), thereby causing defects during forming.

Patent Document 2 relates to a thin steel sheet containing C: 0.05% or more and 0.35% or less, Si: 0.01% or more and 2.0% or less, Mn: 0.8% or more and 3.0% or less, P: 0.05% or less, S: 0.005% or less, Al: 0.005% or more and 0.10% or less, and N: 0.0060% or less, and having a steel microstructure in which a ferrite area fraction is 0% or more and 90% or less, a bainite area fraction is 5% or less (including 0%), a martensite and tempered martensite area fraction is 10% or more (including 100%), and a retained austenite area fraction is 2.0% or less (including 0%), and a standard deviation of yield strength in a width direction is 30 MPa or less, and a maximum bending amount of the steel sheet when sheared at a length of 1 m is 10 mm or less. However, in Patent Document 2, there is a problem in that shape defects occur due to rapid cooling after annealing.

Patent Document 3 discloses a method of forming an iron coating layer of 20 to 1,500 mg/m² on a steel sheet using an electroplating method. However, in the case of Patent Document 3, separate electroplating equipment is required, resulting in increased costs as the number of processes increases.

Patent Document 4 describes a method in which the temperature of a steel sheet is raised to 350 to 650°C in an oxidizing atmosphere to form an oxide film on the surface of the steel sheet, followed by heating to a recrystallization temperature and cooling in a reducing atmosphere. However, in this method, the thickness of the oxide film formed on the surface of the steel sheet varies according to the oxidation method, such that oxidation may not sufficiently occur, or the oxide film may become excessively thick, thereby causing residual oxide film or peeling during subsequent annealing in the reducing atmosphere and deteriorating the surface properties. In example embodiments, a technique of oxidizing in the atmosphere is described. However, the oxidation in the atmosphere leads to the formation of a thick oxide layer, which complicates subsequent reduction or necessitates a high-hydrogen reducing atmosphere.

Accordingly, in order to solve the above-described problems, there is a need to develop ultra-high-strength cold-rolled steel sheets and plated steel sheets having a tensile strength of 1470 MPa or more and exhibiting excellent shape, bendability, and phosphate treatability.

### [Related Art Document]

(Patent Document 1) Japanese Patent Laid-Open Publication No. 2010-248565
(Patent Document 2) Japanese Patent Laid-Open Publication No. 2020-019992
(Patent Document 3) Japanese Patent Laid-Open Publication No. H5-320952
(Patent Document 4) Japanese Patent Laid-Open Publication No. S55-145122

### Summary of Invention

### Technical Problem

An aspect of the present disclosure is to provide a cold-rolled steel sheet and a method of manufacturing the same.

Another aspect of the present disclosure is to provide an ultra-high strength cold-rolled steel sheet and a method of manufacturing the same, the ultra-high strength cold-rolled steel sheet having a tensile strength of 1470 MPa or more and also having an excellent shape, and excellent bendability and phosphate treatability.

### Solution to Problem

According to an aspect of the present disclosure, a cold-rolled steel sheet includes: a base steel sheet; a Ni coating layer formed on the base steel sheet; and a C enrichment layer formed on the Ni coating layer, in which the base steel sheet includes, by wt%, carbon (C): 0.190 to 0.270%, silicon (Si): 0.030 to 0.60%, manganese (Mn): 1.50 to 2.40%, chromium (Cr): 0.0050 to 0.50%, molybdenum (Mo): 0.0030 to 0.50%, boron (B): 0.00050 to 0.0050%, phosphorus (P): 0.030% or less (excluding 0%), sulfur (S): 0.00350% or less (excluding 0%), nitrogen (N): 0.010% or less (excluding 0%), aluminum (Al): 0.010 to 0.10%, niobium (Nb): 0.0030 to 0.050%, titanium (Ti): 0.0050 to 0.050%, and the balance being Fe and unavoidable impurities, the Ni coating layer has an average thickness of 0.005 to 0.065 µm, and the C enrichment layer has a C content of 0.5 to 10 wt%.

The base steel sheet may satisfy Relational Equations 1 to 3 below. [Relational Equation 1] $X = - 10 Si + 40 Mn - 80 Cr \geq 50$ [Relational Equation 2] 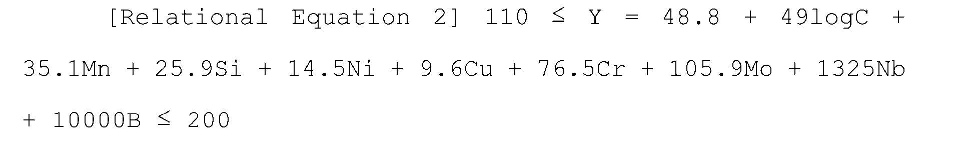 110 ≤ Y = 48.8 + 49logC + 35.1Mn + 25.9Si + 14.5Ni + 9.6Cu + 76.5Cr + 105.9Mo + 1325Nb + 10000B ≤ 200 [Relational Equation 3] $1.2 \leq Y / X \leq 3.7$

(However, the content of each alloying element in Relational Equations 1 to 3 above is in wt%.)

The base steel sheet may include: a central portion; and a surface layer portion formed on an outer side of the central portion in a thickness direction, the microstructure of the central portion may include, in area %, a total of 5% or less (including 0%) of one or more of ferrite and bainite, and the balance being one or more of martensite and tempered martensite, and the microstructure of the surface layer portion may include, in area %, a total of 10% or less (excluding 0%) of one or more of ferrite and bainite, and the balance being one or more of martensite and tempered martensite.

In the base steel sheet, upon measuring EBSD, when a number fraction of a region having a KAM value of 0 to 5.0° may be set to 100%, a number fraction of a region having a KAM value of 0 to 1.0° at a 1/4 position in the thickness direction may be set to 22 to 30%.

The Ni coating layer may have a surface roughness (Rsk) of -0.65 or more.

An oxide layer including oxide having a long-axis length of 1.5 µm or less may be formed between the base steel sheet and the Ni coating layer.

The surface layer portion may be a region extending from a surface of a steel material to 20 µm in a thickness direction.

The cold-rolled steel sheet may have a yield strength of 1000 to 1300 MPa, a tensile strength of 1470 to1670 MPa, a yield ratio of 0.85 or less, and an elongation of 4 to 10%.

The cold-rolled steel sheet may have a bendability (R/t) of 3.5 or less.

The cold-rolled steel sheet may have a degreasing rate of 90% or more.

The cold-rolled steel sheet may have a phosphate coverage of 95 area% or more.

The cold-rolled steel sheet may further include a plating layer between the Ni coating layer and the C enrichment layer.

According to another aspect of the present disclosure, a method of manufacturing a cold-rolled steel sheet includes: heating a slab comprising, by wt%, carbon (C): 0.190 to 0.270%, silicon (Si): 0.030 to 0.60%, manganese (Mn): 1.50 to 2.40%, chromium (Cr): 0.0050 to 0.50%, molybdenum (Mo): 0.0030 to 0.50%, boron (B): 0.00050 to 0.0050%, phosphorus (P): 0.030% or less (excluding 0%), sulfur (S): 0.00350% or less (excluding 0%), nitrogen (N): 0.010% or less (excluding 0%), aluminum (Al): 0.010 to 0.10%, niobium (Nb): 0.0030 to 0.050%, titanium (Ti): 0.0050 to 0.050%, and the balance being Fe and unavoidable impurities; obtaining a hot-rolled steel sheet by finish hot rolling the heated slab; coiling the hot-rolled steel sheet; cold rolling the coiled hot-rolled steel sheet with a cold reduction rate of 45 to 70% using a roll having a surface roughness (Ra) of 2.5 µm or more to obtain a cold-rolled steel sheet; continuously annealing the cold-rolled steel sheet; primarily cooling the continuously annealed cold-rolled steel sheet; secondarily cooling the primarily cooled cold-rolled steel sheet; reheating the secondarily cooled cold-rolled steel sheet and then overaging-treating the cold-rolled steel sheet; forming a Ni coating layer by plating Ni onto the overaging-treated cold-rolled steel sheet with a coating weight of 1 to 15 mg/m²; temper-rolling the cold-rolled steel sheet formed with the Ni coating layer using a rolling force of 500 to 1000 tons; tension leveling the temper-rolled cold-rolled steel sheet; and applying oil to both surfaces of the tension-leveled cold-rolled steel sheet such that a total amount is 500 to 1500 mg/m².

The slab may satisfy Relational Equations 1 to 3 below. [Relational Equation 1] $X = - 10 Si + 40 Mn - 80 Cr \geq 50$ [Relational Equation 2] 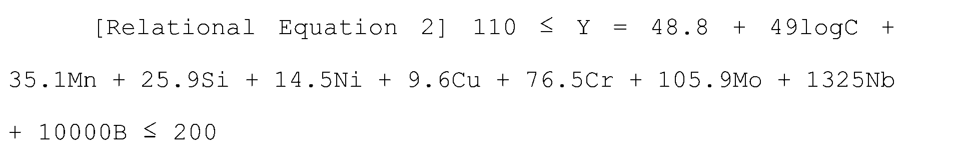 110 ≤ Y = 48.8 + 49logC + 35.1Mn + 25.9Si + 14.5Ni + 9.6Cu + 76.5Cr + 105.9Mo + 1325Nb + 10000B ≤ 200 [Relational Equation 3] $1.2 \leq Y / X \leq 3.7$

(However, the content of each alloying element in Relational Equations 1 to 3 above is in wt%.)

The heating of the slab may be performed at 1100 to 1300°C.

The finish hot rolling may be performed at Ar3 to Ar3+120°C.

The coiling may be performed at Ms to 600°C.

The continuous annealing may be performed at Ac3+20°C to Ac3+80°C.

The continuous annealing may be performed for 30 to 230 seconds.

During the primary cooling, a primary cooling end temperature may be controlled to 670 to 750°C and the primary cooling may be performed at an average cooling rate of 1 to 6°C/s.

During the secondary cooling, a secondary cooling end temperature Tf may be controlled to 110 to 300°C and the secondary cooling may be performed at an average cooling rate of 30 to 300°C/s.

During the secondary cooling, Mf-secondary cooling end temperature Tf may be controlled to be 130°C or lower.

During the overaging treatment, an overaging treatment temperature (H) may be controlled to 100 to 250°C and the overaging treatment may be performed for 5 to 12 minutes.

During the overaging treatment, the overaging treatment temperature (H) - secondary cooling end temperature (Tf) may be controlled to be 100°C or lower.

The tension leveling may be performed with an elongation of 0.01 to 0.50%.

The method of manufacturing a cold-rolled steel sheet may further include, after the tension leveling, forming a plating layer on at least one surface of the cold-rolled steel sheet.

### Advantageous Effects of Invention

According to an aspect of the present disclosure, it is possible to provide a cold-rolled steel sheet and a method of manufacturing the same.

According to an aspect of the present disclosure, it is possible to provide an ultra-high strength cold-rolled steel sheet and a method of manufacturing the same, the ultra-high strength cold-rolled steel sheet having a tensile strength of 1470 MPa or more and also having an excellent shape and excellent bendability and phosphate treatability.

### Brief Description of Drawings

FIG. 1 is a schematic diagram of a cold-rolled steel sheet according to an example embodiment of the present disclosure.
FIG. 2 is an image of Inventive Example 1 after degreasing according to an example embodiment of the present disclosure.
FIG. 3 is an image of Comparative Example 10 after degreasing according to an example embodiment of the present disclosure.
FIG. 4 is a scanning electron microscope (SEM) image of Inventive Example 1 after phosphate treatment according to an example embodiment of the present disclosure.
FIG. 5 is a scanning electron microscope (SEM) image of Comparative Example 11 after phosphate treatment according to an example embodiment of the present disclosure.

### Best Mode for Invention

Terminologies used herein are to mention only a specific exemplary embodiment, and are not to limit the present disclosure. Singular forms used herein include plural forms as long as phrases do not clearly indicate an opposite meaning. A term "including" used in the present specification concretely indicates specific properties, regions, integer numbers, steps, operations, elements, and/or components, and is not to exclude presence or addition of other specific properties, regions, integer numbers, steps, operations, elements, components, and/or a group thereof.

All terms including technical terms and scientific terms used herein have the same meaning as the meaning generally understood by those skilled in the art to which the present disclosure pertains unless defined otherwise. Terms defined in commonly used dictionaries are additionally interpreted as having meanings consistent with related technical literature and currently disclosed content, and are not interpreted in ideal or very formal meanings unless defined.

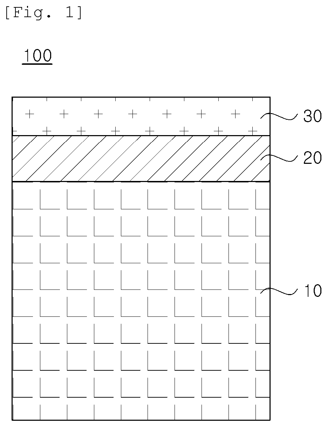

FIG. 1 is a schematic diagram of a cold-rolled steel sheet according to an example embodiment of the present disclosure. Hereinafter, a cold-rolled steel sheet according to an example embodiment of the present disclosure will be described with reference to FIG. 1. The cold-rolled steel sheet 100 of the present disclosure preferably includes a base steel sheet 10; a Ni coating layer 20 formed on the base steel sheet 10; and a C enrichment layer 30 formed on the Ni coating layer 20.

First, the alloy composition of the base steel sheet of the present disclosure will be described in detail. The alloy composition described below refers to wt% unless otherwise specified.

### Carbon (C): 0.190 to 0.270%

C is an interstitial solid solution element and is the most effective and important element for improving the strength of steel. In addition, C is an element that should be added to secure the strength of martensitic steel. When the C content is less than 0.190%, it may be difficult to obtain the yield ratio and tensile strength targeted in the present disclosure. When the C content exceeds 0.270%, the strength increases rapidly, resulting in the deterioration in elongation. Additionally, weldability may be inferior. Therefore, the C content preferably ranges from 0.190 to 0.270%. The lower limit of the C content is more preferably 0.20%. The upper limit of the C content is more preferably 0.260%.

### Silicon (Si): 0.030 to 0.60%

Si is an element effective in increasing resistance to tempering softening, and is also an element effective in improving strength through solid solution strengthening. When the Si content is less than 0.030%, it may be difficult to sufficiently obtain the above-described effects. When the Si content exceeds 0.70%, there is a risk that excessive ferrite will be generated after continuous annealing and cooling, thereby weakening the strength of steel. Furthermore, as the Si is an element that increases resistivity, resistance spot weldability may be inferior. Therefore, the Si content preferably ranges from 0.030 to 0.60%. The lower limit of the Si content is more preferably 0.050%. The upper limit of the Si content is more preferably 0.50%.

### Manganese (Mn): 1.50 to 2.40%

Mn is an element added to ensure strength. When the Mn content is less than 1.50%, as the hardenability is low, when the cooling rate is not sufficiently fast during cooling after continuous annealing, martensite is not formed, making it difficult to secure the level of strength targeted in the present disclosure. When the Mn content exceeds 2.40%, the Ms temperature decreases during cooling after continuous annealing, and as the temperature at which cooling should end decreases, the shape of the steel sheet becomes poor. Furthermore, it is difficult to secure the martensite structure. In addition, during steelmaking/continuous casting operations, Mn-based segregation zones occur along the longitudinal direction of the slab, resulting in the deterioration in bendability. In other words, as the Mn is segregated in the thickness direction and forms manganese bands (Mn bands) within the slab, there is a problem in that cracks occur during continuous casting and defects occur more frequently during the rolling process. Therefore, the Mn content preferably ranges from 1.50 to 2.40%. The lower limit of the Mn content is more preferably 1.60%. The upper limit of the Mn content is more preferably 2.30%.

### Chromium (Cr): 0.0050 to 0.50%

Cr is an element that facilitates securing a low-temperature transformation structure by suppressing ferrite transformation. In addition, when utilizing a continuous annealing process involving slow cooling as in the present disclosure, there is an advantage in suppressing ferrite formation. When the Cr content is less than 0.0050%, as the hardenability is low, when the cooling rate is not sufficiently fast during cooling after continuous annealing, martensite is not formed, making it difficult to secure the level of strength targeted in the present disclosure. When the Cr content exceeds 0.60%, delayed fracture resistance may deteriorate, carbides such as CrC may be formed, thereby reducing bendability, and manufacturing costs may increase due to an excessive alloy addition. Therefore, the Cr content preferably ranges from 0.0050 to 0.60%. The lower limit of the Cr content is more preferably 0.010%. The upper limit of the Cr content is more preferably 0.40%.

### Molybdenum (Mo): 0.0030 to 0.50%

Mo is an element that exhibits effects such as improving hardenability of steel, generating Mo-based fine carbides that serve as hydrogen trap sites, and improving the delayed fracture resistance through martensite refinement. When the Mo content is less than 0.0030%, it may be difficult to sufficiently obtain the above-described effects. When the Mo content exceeds 0.50%, the above-described effects are not significantly increased compared to the increase in manufacturing costs caused by the addition of expensive alloying elements. Therefore, the Mo content preferably ranges from 0.0030 to 0.50%. The lower limit of the Mo content is more preferably 0.0050%. The upper limit of the Mo content is more preferably 0.40%.

### Boron (B): 0.00050 to 0.0050%

B is an element that inhibits ferrite formation, and as a result, the present disclosure has the advantage of inhibiting the formation of ferrite during cooling after continuous annealing. When the B content is less than 0.00050%, there is no hardenability effect at all, so that not only may the strength targeted by the present disclosure not be secured, but also excessive ferrite may be formed in the surface layer portion, thereby deteriorating bendability. When the B content exceeds 0.0050%, the ductility may be significantly reduced. Therefore, the B content preferably ranges from 0.00050 to 0.0050%. The lower limit of the B content is more preferably 0.00070%. The upper limit of the B content is more preferably 0.0040%.

### Phosphorus (P): 0.030% or less (excluding 0%)

P is an impurity element contained in steel. When the P content exceeds 0.030%, weldability deteriorates, and there is a risk of brittleness occurring in the steel. Meanwhile, although it is advantageous that the P is not included in the steel as much as possible, 0% is excluded in consideration of cases where P is unavoidably included during the manufacturing process. Therefore, the P content is preferably 0.030% or less (excluding 0%). The P content is more preferably 0.0250% or less.

### Sulfur (S): 0.00350% or less (excluding 0%)

Similar to P, S is an impurity element contained in steel. When the S content exceeds 0.00350%, the ductility and weldability may be impaired, and a large amount of MnS precipitates may be formed, leading to inferior bendability. Meanwhile, although it is advantageous that the S is not included in the steel as much as possible, 0% is excluded in consideration of cases where P is unavoidably included during the manufacturing process. Therefore, the S content is preferably 0.00350% or less (excluding 0%). The S content is more preferably 0.0030% or less, and even more preferably 0.0020% or less.

### Nitrogen (N): 0.010% or less (excluding 0%)

N is an impurity element, and when the N content exceeds 0.010%, it significantly increases the risk of cracking during continuous casting due to the formation of AlN, etc. Although it is advantageous that the N content is not included in the steel as much as possible, 0% is excluded in consideration of cases where P is unavoidably included during the manufacturing process. Therefore, the N content is preferably in the range of 0.010% or less (excluding 0%). The N content is more preferably 0.0080% or less, and even more preferably 0.0060% or less.

### Aluminum (Al): 0.010 to 0.10%

Al may be added to remove oxygen from molten steel. When the Al content is less than 0.010%, deoxidation is not sufficiently achieved, which impairs the cleanliness of the steel material. When the Al content exceeds 0.10%, not only does the castability of the slab deteriorate, but the temperature required for single-phase heating during continuous annealing also increases, which may lead to production and equipment problems. Therefore, the Al content preferably ranges from 0.010 to 0.10%. The upper limit of the Al content is more preferably 0.0750%.

### Niobium (Nb): 0.0030 to 0.050%

Nb is an element that segregates at the austenite grain boundaries, suppresses the coarsening of austenite grains during the continuous annealing process, and contributes to the strength improvement by forming fine precipitates. When the Nb content is less than 0.0030%, sufficient austenite grain refinement and precipitation strengthening effects may not be obtained. When the Nb content exceeds 0.050%, the precipitation of coarse carbonitrides increases, and there is a risk that the strength and elongation may decrease due to the reduction in carbon content in the steel. In addition, there are problems such as reduced workability of a base material and increased manufacturing costs. Therefore, the Nb content preferably ranges from 0.0030 to 0.050%. The lower limit of the Nb content is more preferably 0.0040%. The upper limit of the Nb content is more preferably 0.040%.

### Titanium (Ti): 0.0050 to 0.050%

Ti is a nitride-forming element that scavenges solute N by precipitating it as TiN. When the Ti content is less than 0.0050%, not only is it difficult to obtain a strength-increasing effect, but also the effect of scavenging solute N is reduced, thereby forming a large amount of AlN and causing cracks during the continuous casting. When the Ti content exceeds 0.050%, the strength of martensite may decrease due to precipitation of additional carbides in addition to the removal of solute N, and hole expansion ratio and bendability may be deteriorated due to excessive formation of carbonitrides such as TiC and TiN. Therefore, the Ti content preferably ranges from 0.0050 to 0.050%. The lower limit of the Ti content is more preferably 0.010%. The upper limit of the Ti content is more preferably 0.040%.

The remaining component is iron (Fe). However, since the unintended impurities from raw materials or the surrounding environment may inevitably be mixed in a normal manufacturing process, the unintended impurities may not be excluded. Since these impurities are known to those skilled in the ordinary manufacturing process, not all of them are specifically mentioned in this specification.

The base steel sheet of the present disclosure satisfies the above-described alloy composition and simultaneously may satisfy Relational Equations 1 to 3 below. [Relational Equation 1] $X = - 10 Si + 40 Mn - 80 Cr \geq 50$

The above Relational Equation 1 is a component relational equation closely related to phosphate treatability. When an X value is less than 50, surface oxides containing Si and Cr components are excessively formed, which may result in inferior phosphate treatability. Therefore, it is preferable that the X value is 50 or greater. The X value is more preferably 55 or greater. [Relational Equation 2] 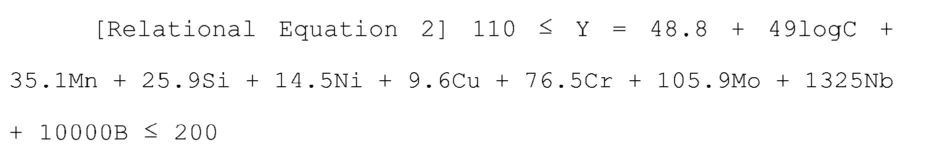 110 ≤ Y = 48.8 + 49logC + 35.1Mn + 25.9Si + 14.5Ni + 9.6Cu + 76.5Cr + 105.9Mo + 1325Nb + 10000B ≤ 200

The above Relational Equation 2 is a component relational equation related to hardenability for securing the microstructure and strength targeted by the present disclosure. When a Y value is less than 110, the hardenability is insufficient, making it difficult to obtain the microstructure targeted by the present disclosure and thus difficult to secure sufficient strength. When the Y value exceeds 200, not only do the manufacturing costs increase, but the strength becomes excessively high, leading to a problem of reduced elongation. Therefore, the Y value preferably ranges from 110 to 200. The lower limit of the Y value is more preferably 120. The upper limit of the Y value is more preferably 190. [Relational Equation 3] $1.2 \leq Y / X \leq 3.7$

The above Relational Equation 3 is a component relational equation for securing an appropriate level of phosphate treatability and hardenability. When the Y/X value is less than 1.2, the phosphate treatability is excellent, but due to the insufficient hardenability, it may be difficult to obtain the target microstructure and thus difficult to secure strength. When the Y/X value exceeds 3.7, the hardenability is sufficiently secured, but the surface oxides containing Si and Cr components are excessively formed, which may make it difficult to secure phosphate. Therefore, the Y/X value preferably ranges from 1.2 to 3.7. A lower limit of the Y/X value is more preferably 1.5. The upper limit of the Y/X value is more preferably 3.1.

Meanwhile, the base steel sheet of the present disclosure may be divided, in terms of microstructure, into a central portion and a surface layer portion formed on an outer side of the central portion in a thickness direction. Meanwhile, since the depth of the surface layer portion may change depending on the thickness of the steel sheet, it is not specifically limited thereto, but as an example, the surface layer portion may be an area up to 20 µm in the thickness direction from the surface of the steel sheet.

The microstructure of the central portion may include, in area %, a total of one or more types of ferrite and bainite: 5% or less (including 0%), and the balance being one or more types of martensite and tempered martensite, and the microstructure of the surface layer portion may include, in area %, a total of one or more types of ferrite and bainite: 10% or less (excluding 0%), and the balance being one or more types of martensite and tempered martensite.

It is preferable that the main phase of the microstructure of the central portion includes one or more types of martensite and tempered martensite. The martensite and tempered martensite are structures that are highly advantageous for securing the strength, hole expansion ratio, bending properties, and weldability targeted by the present disclosure. However, due to the manufacturing process, one or more types of ferrite and bainite may inevitably be formed, and when the total fraction of one or more types of ferrite and bainite exceeds 5%, it may be difficult to secure the physical properties to be obtained by the present disclosure. Therefore, the total fraction of one or more types of ferrite and bainite is preferable 5% or less, and more preferably 3% or less.

It is preferable that the main phase of the microstructure of the surface layer portion includes one or more types of martensite and tempered martensite. Furthermore, it is preferable that the total fraction of one or more types of ferrite and bainite be 10% or less (excluding 0%). Since the ferrite and bainite are softer than the martensite and tempered martensite, the bending properties may be further improved by forming an appropriate amount of ferrite and bainite in the surface layer portion. When the total fraction of one or more of the ferrite and bainite exceeds 10%, it is difficult to secure the sufficient strength, and the bending properties may deteriorate. Therefore, the total fraction of one or more types of ferrite and bainite is preferable 10% or less, and more preferably 7% or less. In the present disclosure, the lower limit of the total fraction of one or more of the ferrite and bainite is not specifically limited, but as an example, may be 1%.

In the cold-rolled steel sheet of the present disclosure, upon measuring EBSD, when a number fraction of a region having a KAM value of 0 to 5.0° may be set to 100%, a number fraction of a region having a KAM value of 0 to 1.0° at a 1/4 position in the thickness direction may be set to 22 to 30%. The dislocation density within grains may be evaluated by a kernel average misorientation (KAM) value. The KAM value is an average value of the amount of crystal rotation (crystal orientation difference) between the target measurement point and the surrounding measurement points, and the larger this value, the more deformation exists within the crystal. The inventors investigated the relationship between the KAM value and the microstructure and confirmed that differences in material properties occur depending on the number fraction of the region where the KAM value is 0 to 1.0° at the 1/4 position in the thickness direction. In the present disclosure, in order to secure the target physical properties, it is preferable to control the number fraction of a region having a KAM value of 0 to 1.0° at a 1/4 position in the thickness direction to 22 to 30%. When the number fraction is less than 22%, a large fraction of highly deformed structures is included, which may make it difficult to secure the target yield strength, and when the number fraction exceeds 30%, a large fraction of less deformed structures is included, which may make it difficult to secure the target tensile strength. Therefore, it is preferable for the number fraction in the region where the KAM value at the 1/4 position in the thickness direction is 0 to 1.0° to have a range of 22 to 30%. The lower limit of the number fraction is more preferably 23% and the upper limit of the number fraction is more preferably 29%. Meanwhile, in the present disclosure, since the region outside the range where the KAM value is 0 to 5.0°, that is, the region exceeding 5.0° has almost no effect on the characteristics of the present disclosure, it is preferable to control the number fraction in the region where the KAM value is 0 to 1.0° by considering the number fraction in the region where the KAM value is 0 to 5.0° as 100%.

In the cold-rolled steel sheet of the present disclosure, the oxide layer may be formed on the base steel sheet. That is, the oxide layer may be formed between the base steel sheet and the following Ni coating layer. Since the oxide layer formed on the base steel sheet may degrade interfacial performance such as degreasing and phosphate, it is preferable not to form the oxide layer if possible. However, since the oxide layer may inevitably be formed during the manufacturing process, it is preferable to minimize the region of the oxide layer. The oxide layer may include an oxide having a long-axis length of 1.5 µm or less. When the long-axis length of the oxide exceeds 1.5 µm, it may degrade interfacial performance such as degreasing and phosphate. Accordingly, the long-axis length of the oxide is preferably 1.5 µm or less. The long-axis length of the oxide is more preferably 1.4 µm or less, and even more preferably 1.3 µm or less. Meanwhile, in the present disclosure, since it is advantageous for the oxide to be smaller in size, the lower limit thereof is not specifically limited. However, considering the alloy composition and manufacturing conditions, it is difficult to control the long-axis length of the oxide to be less than 0.1 µm. That is, as an example, the lower limit of the long-axis length of the oxide may be 0.1 µm. Furthermore, in the present disclosure, the type of the oxide is not specifically limited, and as an example, it may be a composite oxide in which oxygen is combined with Si, Mn, Al, etc.

In the cold-rolled steel sheet of the present disclosure, the Ni coating layer may be formed on the base steel sheet. The Ni coating layer facilitates the nucleation and growth of phosphate crystals. More specifically, when the steel sheet is immersed in a zinc phosphate solution, a potential difference occurs between a region in which Ni is present and a region in which Ni is not present, thereby forming a local cell (microcell). Accordingly, the electrochemically noble nickel acts as a cathode, while the relatively less noble iron acts as an anode, thereby promoting dissolution of the iron. In this case, at the Ni nucleus site acting as a cathode, hydrogen ions are reduced by a cathodic reaction, thereby increasing the pH and promoting the nucleation and growth of phosphate crystals at the Ni nucleus site. The Ni coating layer may have an average thickness of 0.005 to 0.065 µm. When the average thickness of the Ni coating layer is less than 0.005 µm, the nucleation and growth of the phosphate crystals may not be promoted. When the average thickness of the Ni coating layer exceeds 0.065 µm, hydroxyl groups (-Ni-OH) may be formed on the surface and excessively react with the polar portion of the rust-preventive additive (surfactant) contained in the rust-preventive oil, thereby preventing degreasing. Therefore, the average thickness of the Ni coating layer preferably ranges from 0.005 to 0.065 µm. The lower limit of the average thickness of the Ni coating layer is more preferably 0.01 µm, and even more preferably 0.015 µm. The upper limit of the average thickness of the Ni coating layer is more preferably 0.06 µm, and even more preferably 0.055 µm. The Ni coating layer may have a surface roughness Rsk of -0.65 or more. The surface roughness Rsk (skewness) is one of several factors of surface roughness related to the asymmetry of sharp protrusions. The closer the value of the surface roughness Rsk is to 0 or the more positive the value is, the more advantageous it is for securing bending properties. As the surface roughness Rsk becomes more negative, valleys on the flat surface become deeper, causing stress concentration in these regions and increasing sensitivity to crack formation, thereby deteriorating bending properties. When the value of the surface roughness Rsk is less than -0.65, the bending properties may deteriorate. Therefore, the surface roughness Rsk preferably has a range of -0.65 or greater. The surface roughness Rsk is more preferably -0.6 or greater, and even more preferably -0.55 or greater. Meanwhile, in the present disclosure, a higher surface roughness Rsk is more advantageous, and thus the upper limit thereof is not particularly limited. However, as an example, the upper limit of the surface roughness Rsk may be +0.5.

In the cold-rolled steel sheet of the present disclosure, it is preferable that a C enrichment layer is formed on the Ni coating layer. The C enrichment layer may be formed by C, which is a major component included in the oil or rust-preventive oil applied to prevent corrosion, such as rust, from occurring on the steel sheet. The C enrichment layer serves to prevent corrosion, such as rust. It is preferable that the C enrichment layer has a C content of 0.05 to 10 wt%. When the C content of the C enrichment layer is less than 0.05 wt%, there is a possibility that corrosion, such as rust, may occur on the steel sheet. When the C content of the C enrichment layer exceeds 10 wt%, the degreasing may not occur. Therefore, it is preferable that the C content of the C enrichment layer has a range of 0.05 to 10 wt%. The lower limit of the C content of the C enrichment layer is more preferably 1%, and even more preferable 2%. The upper limit of the C content of the C enrichment layer is more preferably 9%, and even more preferable 8%.

As described above, the cold-rolled steel sheet of the present disclosure may have a yield strength of 1,000 to 1,300 MPa, a tensile strength of 1,470 to 1,670 MPa, a yield ratio of 0.85 or less, an elongation of 4 to 10%, and a bendability (R/t) of 3.5 or less. It is more preferable that the yield ratio be 0.83 or less, and since the lower yield ratio is advantageous in the present disclosure, the lower limit thereof is not specifically limited; however, as an example, the lower limit of the yield ratio may be 0.80. The bendability is more preferably 3.3 or less, and in the present disclosure, a lower bendability is more advantageous. Accordingly, the lower limit thereof is not particularly limited, but, as an example, the lower limit of the bendability may be 3.0.

In addition, the cold-rolled steel sheet of the present disclosure may have a degreasing rate of 90% or more. The degreasing rate refers to the degree of removal of rust-preventive oil, etc., applied to the surface of a steel sheet to form phosphate on the surface of the steel sheet. In the present disclosure, since the higher degreasing rate is advantageous, the upper limit thereof is not specifically limited, but as an example, the upper limit of the degreasing rate may be 95%.

In addition, the cold-rolled steel sheet of the present disclosure may have a phosphate coverage of 95% or more. The phosphate coverage refers to (phosphate formation region on the steel sheet surface / total area on the steel sheet surface) × 100. Since the higher phosphate coverage is advantageous in the present disclosure, the upper limit is not specifically limited; however, as an example, the upper limit of the phosphate coverage may be 96%.

The thickness of the cold-rolled steel sheet of the present disclosure may be 0.6 to 2.3 mm. The lower limit of the thickness of the cold-rolled steel sheet is more preferably 0.7 mm, and more preferably 0.8 mm. The upper limit of the thickness of the cold-rolled steel sheet is more preferably 2.2 mm, and even more preferably 2.1 mm.

Meanwhile, the cold-rolled steel sheet of the present disclosure may additionally include a plating layer between the Ni coating layer and the C enrichment layer. In the present disclosure, the type of plating layer is not specifically limited, and any type of plating layer commonly used in the relevant technical field may be formed. However, as an example, the plating layer may be an electro-galvanized layer.

Hereinafter, a method of manufacturing a cold-rolled steel sheet according to an example embodiment of the present disclosure will be described.

First, a slab satisfying the above-described alloy composition and Relational Equations 1 to 3 is heated. The slab heating process is performed to facilitate the subsequent hot rolling process and to sufficiently obtain the physical properties of the target steel sheet. The heating of the slab may be performed at 1100 to 1300°C. When the slab heating temperature is below 1100°C, a problem arises in which the hot rolling load increases rapidly. When the slab heating temperature exceeds 1300°C, the amount of surface scale increases, and the yield of the material decreases. The lower limit of the slab heating temperature is more preferably 1110°C, more preferably 1120°C, and most preferably 1130°C. The upper limit of the slab heating temperature is more preferably 1290°C, even more preferably 1280°C, and most preferably 1270°C.

Subsequently, the heated slab is finished hot-rolled to obtain a hot-rolled steel sheet. The finish hot rolling may be performed at Ar3 to Ar3+120°C. When the finish hot-rolling temperature is lower than Ar3, rolling is performed in a ferrite+austenite intercritical region or a ferrite region, thereby forming a mixed grain structure, and sheet breakage may occur due to fluctuations in hot-rolling load. When the finish hot-rolling temperature exceeds Ar3+120°C, a large amount of surface scale may be generated, and the surface quality may deteriorate. The lower limit of the finish hot-rolling temperature is more preferably Ar3+10°C, more preferably Ar3+20°C, and most preferably Ar3+30°C. The upper limit of the finish hot-rolling temperature is more preferably Ar3+110°C, more preferably Ar3+100°C, and most preferably Ar3+90°C. Meanwhile, Ar3 refers to the temperature at which austenite begins to transform into ferrite upon cooling, and may be calculated using the following Equation 1. [Equation 1] $Ar 3 \left(°C\right) = 910 - 203 √ C + 44.7 Si + 31.5 Mo$

Thereafter, the hot-rolled steel sheet is coiled. The coiling may be performed at Ms to 600°C. When the coiling temperature exceeds 600°C, internal oxidation occurs on the surface of the steel sheet, causing the microstructure formed in the surface layer portion to become non-uniform, so the bending properties may deteriorate. Meanwhile, it is preferable to control the coiling temperature to be low in order to secure material uniformity in the longitudinal and widthwise directions by forming the microstructure of the hot-rolled steel sheet as a single-phase structure rather than a complex structure as much as possible. However, when the coiling temperature is lower than Mf, the strength of the hot-rolled steel sheet becomes excessively high, thereby increasing the rolling load during a subsequent cold-rolling process, which may make actual production impossible. The lower limit of the coiling temperature is more preferably Ms+50°C. The upper limit of the coiling temperature is more preferably 550°C. The Ms refers to a temperature at which austenite begins to transform into martensite upon cooling, and may be calculated using Equation 2 below. [Equation 2] 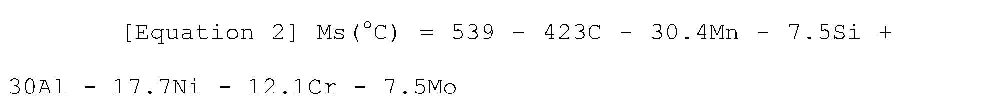 Ms(°C) = 539 - 423C - 30.4Mn - 7.5Si + 30Al - 17.7Ni - 12.1Cr - 7.5Mo

Meanwhile, after the coiling, it may be cooled by air cooling or water cooling. In addition, after the cooling, a pickling process may be performed to remove the oxide layer formed on the surface of the hot-rolled steel sheet.

Subsequently, the coiled hot-rolled steel sheet is cold-rolled to obtain the cold-rolled steel sheet. The cold rolling may be performed using a roll having a surface roughness (Ra) of 2.5 µm or more. When the surface roughness Ra of the cold-rolling roll is less than 2.5 µm, the negative value of the surface roughness Rsk of the steel sheet becomes excessively large, which may degrade the bending properties. In the present disclosure, the upper limit is not specifically limited because the larger the surface roughness Ra of the cold-rolling roll, the fewer deep grooves are formed in the rolling direction that are inferior to the bending properties. The surface roughness Ra of the cold-rolling roll may preferably be 3.0 µm or more, and since a larger surface roughness Ra of the cold-rolling roll is more advantageous in the present disclosure, the upper limit thereof is not particularly limited. As an example, the upper limit of the surface roughness (Ra) of the cold-rolling roll may be 6.5 µm. The cold rolling may be performed with a cold reduction rate of 45 to 70%. When the cold reduction rate is less than 45%, not only is it difficult to secure the thickness desired in the present disclosure, but there is also a risk that the residual crystal grains formed during hot rolling may cause austenite to form during annealing heat treatment, thereby affecting the final physical properties. Furthermore, the negative value of the surface roughness Rsk may become excessively large, potentially leading to inferior bending properties. When the cold reduction rate exceeds 70%, the amount of reduction in the length and width directions may become uneven due to work hardening occurring during the cold rolling, which may result in material variation of the steel sheet. Additionally, it may be difficult to secure the thickness desired in the present disclosure due to the rolling load. Therefore, it is preferable for the cold reduction rate to have a range of 45 to 70%. The lower limit of the cold reduction rate is more preferably 46%, more preferably 47%, and most preferably 48%. The upper limit of the cold reduction rate is more preferably 68%, even more preferably 66%, and most preferably 64%.

Subsequently, the cold-rolled steel sheet is continuously annealed. The continuous annealing may be performed at Ac3+20°C to Ac3+80°C. When the continuous annealing temperature is lower than Ac3+20°C, intercritical annealing rather than annealing in a single-phase region occurs over the entire length of the steel sheet, thereby forming a mixed grain structure. As a result, it may be difficult to secure the physical properties targeted by the present disclosure, and in particular, the hardness difference between phases becomes large, which may significantly deteriorate hole expansion ratio. When the continuous annealing temperature exceeds Ac3+80°C, equipment trouble may occur due to overloading of the annealing furnace. The lower limit of the continuous annealing temperature is more preferably Ac3+21°C, even more preferably Ac3+24°C, and most preferably Ac3+25°C. The upper limit of the continuous annealing temperature is more preferably Ac3+70°C, even more preferably Ac34+60°C, and most preferably Ac3+50°C. Meanwhile, the Ac3 refers to the temperature at which 100% transformation of ferrite into austenite is completed upon heating, and may be calculated using Equation 3 below. [Equation 3] 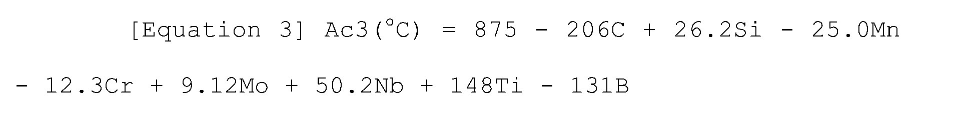 Ac3(°C) = 875 - 206C + 26.2Si - 25.0Mn - 12.3Cr + 9.12Mo + 50.2Nb + 148Ti - 131B

The continuous annealing may be performed for 30 to 230 seconds. When the continuous annealing time is less than 30 seconds, there is a disadvantage in that it is difficult to secure a single-phase austenite structure. When the continuous annealing time exceeds 230 seconds, the austenite size becomes coarsened, which has a disadvantage in that it is difficult to secure strength and bending properties. The lower limit of the continuous annealing time is more preferably 40 seconds, even more preferably 50 seconds, and most preferably 60 seconds. The upper limit of the continuous annealing time is more preferably 220 seconds, even more preferably 210 seconds, and most preferably 200 seconds.

Thereafter, the continuously annealed cold-rolled steel sheet is primarily cooled. During the primary cooling, a primary cooling end temperature may be controlled to 670 to 750°C and performed at an average cooling rate of 1 to 6°C/s. When the primary cooling end temperature is lower than 670°C, a large amount of soft ferrite and bainite in addition to martensite is formed during the cooling process, thereby making the microstructure of the surface layer portion non-uniform, which may deteriorate bending properties. When the primary cooling end temperature exceeds 750°C, the temperature difference between the primary cooling end temperature and the secondary cooling end temperature Tf becomes excessively large, thereby causing a rapid phase transformation, which may result in poor product shape. The lower limit of the primary cooling end temperature is more preferably 680°C. The upper limit of the primary cooling end temperature is more preferably 740°C. When the primary average cooling rate is less than 1°C/s, the ferrite is formed during the cooling, making it impossible to secure the level of strength targeted by the present disclosure. When the primary average cooling rate exceeds 6°C/s, the average cooling rate during the subsequent secondary cooling decreases, thereby increasing the fraction of the low-temperature transformation phases other than martensite. As a result, the level of strength targeted by the present disclosure may not be secured. The lower limit of the primary average cooling rate is more preferably 2°C/s. The upper limit of the primary average cooling rate is more preferably 5°C/s.

Subsequently, the primarily cooled cold-rolled steel sheet is secondarily cooled. The secondary cooling is intended to secure one or more of the main phases of the present disclosure, namely martensite and tempered martensite. During the secondary cooling, the secondary cooling end temperature Tf may be controlled to 110 to 300°C and performed at an average cooling rate of 30 to 300°C/s. When the secondary cooling end temperature Tf is below 110°C, the shape defects are caused by rapid phase transformation, and there is a disadvantage that continuous production is difficult due to strip meandering problems. When the secondary cooling end temperature Tf exceeds 300°C, it may be difficult to secure the strength targeted by the present disclosure. The lower limit of the secondary cooling end temperature is more preferably 115°C, even more preferably 120°C, and most preferably 130°C. The upper limit of the secondary cooling end temperature is more preferably 290°C, even more preferably 280°C, and most preferably 27°C. When the secondary average cooling rate is less than 30°C/s, soft ferrite transformation occurs during cooling, making it difficult to secure the target strength. When the secondary average cooling rate exceeds 300°C/s, the product shape may become defective due to rapid phase transformation. The lower limit of the secondary average cooling rate is more preferably 35°C/s, even more preferably 40°C/s, and most preferably 45°C/s. The upper limit of the secondary average cooling rate is more preferably 290°C/s, even more preferably 280°C/s, and most preferably 270°C/s.

During the secondary cooling, Mf-secondary cooling end temperature Tf may be controlled to be 130°C or lower. When the Mf-Tf exceeds 130°C, the spacing of the martensite laths becomes excessively dense, and as the structure is composed of a large amount of deformation, the yield strength increases, making it difficult to secure the target yield ratio. The Mf-Tf is more preferably 120°C or lower. Meanwhile, the Ms refers to the temperature at which the martensite transformation ends upon cooling, and may be calculated using Equation 4 below. [Equation 4] 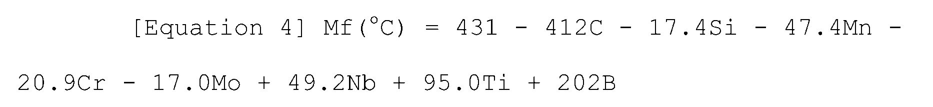 Mf(°C) = 431 - 412C - 17.4Si - 47.4Mn - 20.9Cr - 17.0Mo + 49.2Nb + 95.0Ti + 202B

Thereafter, the secondary cooled cold-rolled steel sheet is reheated and then subjected to overaging treatment. Through the reheating and overaging treatment, the martensite obtained by the above-described rapid cooling process is transformed into tempered martensite, thereby increasing the yield strength. During the overaging treatment, an overaging treatment temperature (H) may be controlled to 100 to 250°C and performed for 5 to 12 minutes. When the overaging treatment temperature is below 100°C, there is a disadvantage that tempering is not sufficiently performed, resulting in low yield strength and inability to secure sufficient toughness. When the overaging treatment temperature exceeds 250°C, there is a disadvantage that bendability becomes inferior due to the precipitation and coarsening of large amounts of carbides. The lower limit of the overaging treatment temperature is more preferably 110°C, even more preferably 120°C, and most preferably 130°C. The upper limit of the overaging treatment temperature is more preferably 245°C, even more preferably 240°C, and most preferably 235°C. When the overaging treatment time is less than 5 minutes, the tempering is not sufficiently performed, and the yield strength may be lowered. When the overaging treatment time exceeds 12 minutes, carbides may coarsen due to excessive tempering, which may result in deterioration of bending properties. The lower limit of the overaging treatment time is more preferably 5.5 minutes, even more preferably 6.0 minutes, and most preferably 6.5 minutes. The upper limit of the overaging treatment time is more preferably 11.5 minutes, even more preferably 11 minutes, and most preferably 10.5 minutes.

During the overaging treatment, the overaging treatment temperature H - secondary cooling end temperature Tf may be controlled to be 100°C or lower. When the overaging treatment temperature H-the secondary cooling end temperature Tf exceeds 100°C, the excessive tempering occurs, increasing the yield strength and making it difficult to secure the target low yield ratio. It is more preferable that the overaging treatment temperature (H) - secondary cooling end temperature (Tf) is 90°C or lower.

Subsequently, the Ni coating layer is formed on the overaging treated cold-rolled steel sheet. The formation of the Ni coating layer may include plating Ni with a coating weight of 1 to 15 mg/m². Through this, the Ni coating layer having an average thickness of 0.005 to 0.065 µm may be formed. The lower limit of the Ni coating weight is more preferably 2 mg/m², and even more preferable 3 mg/m². The upper limit of the Ni coating weight is more preferably 14 mg/m², and even more preferably 13 mg/m². Although not specifically limited in the present disclosure, as an example, the plating may be electroplating.

Subsequently, the cold-rolled steel sheet with the Ni coating layer formed thereon is subjected to the temper rolling (skin pass mill (SPM)). The temper rolling enables control of the surface roughness Rsk. The temper rolling may be performed with a rolling force of 500 to 1000 tons. When the rolling force during the temper rolling is less than 500 tons, the load is low, making it difficult to control the surface roughness Rsk, and when the rolling force exceeds 1000 tons, the surface work hardening is severe, which may result in inferior bending properties. The lower limit of the rolling force during the temper rolling is more preferably 550 tons, and even more preferably 600 tons. The upper limit of the rolling force during the temper rolling is more preferably 950 tons, and even more preferably 900 tons.

Subsequently, the temper-rolled cold-rolled steel sheet is subjected to tension leveling T/L. The tension leveling is intended to correct the shape of the steel sheet. The tension leveling may be performed with an elongation of 0.01 to 0.50%. When the elongation is less than 0.01% during the tension leveling, the shape correction may be difficult. When the elongation exceeds 0.50% during the tension leveling, the work hardening may become severe, and the bending properties may deteriorate. The lower limit of the elongation during the tension leveling is more preferably 0.03%, and even more preferably 0.05%. The upper limit of the elongation during the tension leveling is more preferably 0.40%, and even more preferably 0.35%.

Meanwhile, after the tension leveling, a step of forming a plating layer on at least one surface of the cold-rolled steel sheet may be additionally included. The present disclosure does not specifically limit the method of forming the plating layer, and any method commonly used in the relevant technical field may be used. However, as an example, the plating layer may be an electro-galvanized layer.

Subsequently, oil is applied to both sides of the tension-leveled cold-rolled steel sheet such that the total amount is 500 to 1500 mg/m². When the applied oil amount is less than 500 mg/m², the corrosion such as rust may occur on the steel sheet. When the applied oil amount exceeds 1500 mg/m², the degreasing does not occur, and the phosphate treatability may be reduced. The lower limit of the applied oil amount is more preferably 600 mg/m², and even more preferably 700 mg/m². The upper limit of the applied oil amount is more preferably 1400 mg/m², and even more preferably 1300 mg/m². Meanwhile, the present disclosure does not specifically limit the type of oil, but for example, 550HN, N-6130, BW-90EG, etc., may be used.

### Mode for Invention

Hereinafter, the present disclosure will be described in more detail with reference to Examples. However, the description of these Examples is provided only for illustrating the implementation of the present disclosure, and is not limited the present disclosure. This is because the scope of the present disclosure is determined by the matters described in the claims and the matters reasonably inferred therefrom.

### (Example)

A slab having the alloy composition listed in Table 1 below was heated at 1200°C, and the heated slab was finish hot-rolled at 900°C to obtain a hot-rolled steel sheet, followed by coiling at 450°C. Subsequently, the coiled hot-rolled steel sheet was cold-rolled under the conditions listed in Table 2 below to obtain a cold-rolled steel sheet. Thereafter, a 1.4 mm thick cold-rolled steel sheet was manufactured by continuous annealing, primary cooling, secondary cooling, reheating, overaging treatment, Ni plating, temper rolling, tension leveling, and applying oil (550 HN) under the conditions listed in Tables 2 and 3 below. Meanwhile, the conditions listed in Tables 2 and 3 below were based on the surface temperature of the steel sheet.

For the cold-rolled steel sheet manufactured in this manner, a microstructure, a number fraction of a region having a kernel average misorientation (KAM) of 0 to 1.0°, a long-axis length of oxide within an oxide layer, a thickness and surface roughness of a Ni coating layer, a C content in a C enrichment layer, and mechanical properties were measured, and then, the results were shown in Tables 4 and 5 below.

The types and fractions of the microstructures were observed through a scanning electron microscope (SEM) and an optical microscope (OM) with respect to a surface layer portion (a position 20 µm from a surface in a thickness direction) and a central portion (a position of 1/4t, where t is a thickness of the steel material) of the steel sheet, and the fraction of each phase was analyzed three times through image analysis to calculate an average value.

The number fraction of a region having a KAM value of 0 to 1.0° was measured three times at 2,000× magnification using electron backscatter diffraction (EBSD) (confidence index (CI) ≥ 0.3) with respect to a position of 1/4t (where t is a thickness of the steel material), and the average value was calculated. In this case, the number fraction of the region having the KAM value of 0 to 5.0° was considered as 100% during EBSD measurement.

The long-axis lengths of the oxides in the oxide layer were measured by capturing a surface of the cold-rolled steel sheet at 20,000× magnification using a scanning electron microscope (SEM), distinguishing five oxides in descending order of long-axis length, and calculating an average value thereof.

The thickness of the Ni coating layer was measured using a glow discharge spectrometer (GDS) after washing the cold-rolled steel sheet with methanol.

The surface roughness Rsk of the Ni coating layer was measured five times using a contact-type 2D roughness meter, and the average value was calculated after excluding maximum (Max) and minimum (Min) values.

The carbon content in the C enrichment layer was measured using the glow discharge spectrometer (GDS) after washing the cold-rolled steel sheet with methanol.

Meanwhile, the degreasing rate and phosphate coverage were measured for the cold-rolled steel sheet. To this end, the process of degreasing → washing → surface conditioning → phosphate treatment was applied to the manufactured cold-rolled steel sheet. In this case, free acidity of a phosphate solution used for the phosphate treatment was set to 0.75pt, total acidity was set to 23pt, and accelerator was set to 2.8pt.

The degreasing ratio was measured by washing under conditions of a chemical agent: EC-90, pH: 10.9, temperature: 45°C, and time: 120 s, visually performing a first confirmation after capturing 10 seconds later, and secondarily measuring using image analysis software.

The phosphate coverage was measured using the image analysis software after capturing five BSE images at 1500x magnification using the scanning electron microscope (SEM).

**[Table 1]**

| Steel Grade No . | Alloy Composition (wt%) | | | | | | | | | | | | | | |
|---|---|---|---|---|---|---|---|---|---|---|---|---|---|---|---|
| | C | Si | Mn | P | S | Al | Cr | Mo | Nb | Ti | B | N | X | Y | Y/X |
| 1 | 0.25 | 0.10 | 1.81 | 0.010 | 0.0009 | 0.025 | 0.06 | 0.07 | 0.31 | 0.025 | 0.0020 | 0.0035 | 67 | 158 | 2.4 |
| 2 | 0.23 | 0.15 | 1.91 | 0.011 | 0.0011 | 0.031 | 0.14 | 0.08 | 0.025 | 0.030 | 0.0019 | 0.0041 | 64 | 160 | 2.5 |
| 3 | 0.24 | 0.06 | 1.75 | 0.014 | 0.0008 | 0.030 | 0.10 | 0.06 | 0.027 | 0.023 | 0.0021 | 0.0042 | 61 | 152 | 2.5 |
| 4 | 0.24 | 0.56 | 1.25 | 0.011 | 0.0014 | 0.039 | 0.25 | 0.03 | 0.025 | 0.021 | 0.0025 | 0.0035 | 24 | 157 | 6.4 |
| 5 | 0.24 | 0.65 | 1.65 | 0.012 | 0.0012 | 0.035 | 0.21 | 0.15 | 0.015 | 0.025 | 0.0021 | 0.0025 | 43 | 166 | 3.9 |
| 6 | 0.25 | 0.75 | 1.56 | 0.015 | 0.0010 | 0.030 | 0.25 | 0.05 | 0.025 | 0.020 | 0.0020 | 0.0031 | 35 | 171 | 4.9 |
| 7 | 0.15 | 0.15 | 1.75 | 0.010 | 0.0010 | 0.035 | 0.01 | 0.01 | 0.015 | 0.027 | 0.0010 | 0.0038 | 68 | 104 | 1.5 |
| 8 | 0.22 | 0.25 | 1.68 | 0.010 | 0.0011 | 0.041 | 0.70 | 0.04 | 0.030 | 0.025 | 0.0025 | 0.0041 | 9 | 205 | 23.5 |
| 9 | 0.20 | 0.11 | 1.55 | 0.007 | 0.0010 | 0.031 | 0.55 | 0.25 | 0.021 | 0.020 | 0.0040 | 0.0051 | 17 | 208 | 12.3 |
| X = C+Mn/20+Si/30+2P+4S | | | | | | | | | | | | | | | |
| Y = 48.8+49logC+35.1Mn+25.9Si+14.5Ni+9.6Cu+76.5Cr+105.9Mo+1325Nb+10 000B | | | | | | | | | | | | | | | |

**[Table 2]**

| Divis ion | St ee 1 Gr ad e No . | Ar3 (°C ) | Ms (°C ) | Cold Redu ctio n Rati o (%) | Cold Rollin g Roll Roughn ess (µm) | Ac3 (°C ) | Ann eal ing tem per atu re (°C ) | Pri mar y Coo lin g End Tem per atu re (°C) | Prim ary Aver age Cool ing Rate (°C/ s) | Mf (°C ) | Seco ndar y Cool ing End Temp erat ure (Tf) (°C) | Seco ndar y Aver age Cool ing Rate (°C/ s) | Mf-Tf (°C ) |
|---|---|---|---|---|---|---|---|---|---|---|---|---|---|
| Inven tive Examp le 1 | 1 | 815 | 370 | 56 | 4.5 | 786 | 861 | 715 | 3 | 242 | 174 | 62 | 68 |
| Inven tive Example 2 | 2 | 822 | 371 | 56 | 4.5 | 788 | 851 | 705 | 3 | 243 | 179 | 61 | 64 |
| Inventive Example 3 | 3 | 815 | 379 | 56 | 4.5 | 787 | 859 | 712 | 3 | 249 | 195 | 59 | 54 |
| Comparative Example 1 | 4 | 837 | 355 | 56 | 4.5 | 810 | 854 | 701 | 3 | 261 | 201 | 60 | 60 |
| Comparative Example 2 | 5 | 844 | 336 | 56 | 4.5 | 804 | 849 | 736 | 3 | 239 | 165 | 59 | 74 |
| Compa rativ e Examp le 3 | 6 | 844 | 327 | 56 | 4.5 | 805 | 852 | 725 | 3 | 238 | 175 | 61 | 63 |
| Compa rativ e Example 4 | 7 | 838 | 412 | 56 | 4.5 | 809 | 859 | 715 | 3 | 287 | 184 | 65 | 103 |
| Comparative Example 5 | 8 | 827 | 369 | 56 | 4.5 | 791 | 865 | 701 | 3 | 245 | 192 | 62 | 53 |
| Comparative Example 6 | 9 | 832 | 391 | 56 | 4.5 | 797 | 867 | 709 | 3 | 261 | 190 | 61 | 71 |
| Comparative Example 7 | 1 | 815 | 370 | 40 | 4.5 | 786 | 853 | 716 | 3 | 242 | 189 | 63 | 53 |
| Comparative Example 8 | 1 | 815 | 370 | 56 | 1.5 | 786 | 851 | 725 | 3 | 242 | 184 | 61 | 58 |
| Comparative Example 9 | 1 | 815 | 370 | 56 | 4.5 | 786 | 850 | 715 | 3 | 242 | 175 | 60 | 67 |
| Comparative Example 10 | 1 | 815 | 370 | 56 | 4.5 | 786 | 861 | 716 | 3 | 242 | 181 | 61 | 61 |
| Comparative Example 11 | 1 | 815 | 370 | 56 | 4.5 | 786 | 859 | 721 | 3 | 242 | 185 | 67 | 57 |
| Ar3(°C) = 910 - 203√C + 44.7Si + 31.5Mo | | | | | | | | | | | | | |
| Ms(°C) = 539 - 423C - 30.4Mn - 7.5Si + 30Al - 17.7Ni - 12.1Cr - 7.5Mo | | | | | | | | | | | | | |
| Ac3(°C) = 875 - 206C + 26.2Si - 25.0Mn - 12.3Cr + 9.12Mo + 50.2Nb + 148Ti - 131B | | | | | | | | | | | | | |
| Mf(°C) = 431-412C-17.4Si-47.4Mn-20.9Cr-17.0Mo+49.2Nb+95.0Ti+202B | | | | | | | | | | | | | |

**[Table 3]**

| Divis ion | Stee l grad e No. | Reheati ng/ Overagi ng Treatme nt Tempera ture (H) (°C) | Overagi ng Treatme nt Time (minute ) | H-Tf (°C) | Ni Coating Weight (mg/m²) | Temper Rolling Force (ton) | Tensio n Leveli ng Elonga tion (%) | Applie d Oil Amount (mg/m² ) |
|---|---|---|---|---|---|---|---|---|
| Inven tive Examp le 1 | 1 | 175 | 8.6 | 1 | 3 | 650 | 0.05 | 859 |
| Inven tive Examp le 2 | 2 | 174 | 8.5 | -5 | 3 | 650 | 0.05 | 901 |
| Inven tive Examp le 3 | 3 | 195 | 8.5 | 0 | 3 | 650 | 0.05 | 932 |
| Compa rativ e Examp le 1 | 4 | 184 | 8.4 | -17 | 3 | 650 | 0.05 | 921 |
| Compa rative Examp le 2 | 5 | 201 | 8.3 | 36 | 3 | 650 | 0.05 | 910 |
| Compa rativ e Examp le 3 | 6 | 194 | 8.4 | 19 | 3 | 650 | 0.05 | 897 |
| Compa rativ e Examp le 4 | 7 | 201 | 8.5 | 17 | 3 | 650 | 0.05 | 900 |
| Compa rativ e Examp le 5 | 8 | 200 | 8.9 | 8 | 2 | 650 | 0.05 | 901 |
| Compa rativ e Examp le 6 | 9 | 187 | 8.4 | -3 | 3 | 650 | 0.05 | 897 |
| Comparativ e Examp le 7 | 1 | 187 | 8.2 | -2 | 3 | 650 | 0.05 | 854 |
| Compa rativ e Examp le 8 | 1 | 189 | 8.4 | -5 | 3 | 650 | 0.05 | 934 |
| Compa rativ e Examp le 9 | 1 | 200 | 8.6 | 25 | 3 | 150 | 0.05 | 856 |
| Compa rativ e Examp le 10 | 1 | 197 | 8.3 | 16 | 23 | 650 | 0.05 | 935 |
| Compa rativ e Examp le 11 | 1 | 196 | 8.4 | 11 | 3 | 650 | 0.05 | 1670 |

**[Table 4]**

| Divis ion | Microstructure (area%) | | | | Number Fracti on of Region Having KAM Value of 0 to 1.0° | Long Axis Leng th of Oxid e (µm) | Ni Coating Layer | | C Conte nt withi n C Enric hment Layer (wt%) |
|---|---|---|---|---|---|---|---|---|---|
| | Surface Layer Portion | | Central Portion | | | | Ave rag e Thi ckn ess (µm ) | Surf ace Roug hnes s (Rsk ) | |
| | One of more of F and B | One or more of M and Tm | One of more of F and B | One or more of M and Tm | | | | | |
| Inven tive Examp le 1 | 2 | 98 | 1 | 99 | 26 | 0.5 | 0.0 34 | - 0.41 | 4.5 |
| Inven tive Examp le 2 | 3 | 97 | 1 | 99 | 25 | 0.5 | 0.0 32 | - 0.42 | 4.6 |
| Inven tive Examp le 3 | 3 | 97 | 1 | 99 | 24 | 0.5 | 0.0 29 | - 0.38 | 4.5 |
| Comparativ e Examp le 1 | 12 | 88 | 4 | 96 | 33 | 0.95 | 0.031 | -0.42 | 4.3 |
| Compa rativ e Examp le 2 | 13 | 87 | 3 | 97 | 31 | 0.84 | 0.0 28 | - 0.42 | 4.6 |
| Compa rativ e Examp le 3 | 12 | 88 | 3 | 97 | 32 | 0.89 | 0.0 28 | - 0.41 | 4.7 |
| Compa rativ e Examp le 4 | 15 | 85 | 5 | 95 | 33 | 0.5 | 0.0 31 | - 0.43 | 5.1 |
| Compa rativ e Examp le 5 | 3 | 97 | 1 | 99 | 26 | 0.95 | 0.0 34 | - 0.45 | 5.0 |
| Compa rativ e Examp le 6 | 3 | 97 | 3 | 97 | 25 | 0.87 | 0.0 20 | - 0.42 | 4.7 |
| Compa rativ e Examp le 7 | 2 | 98 | 1 | 99 | 24 | 0.5 | 0.0 30 | - 0.69 | 11.1 |
| Compa rativ e Examp le 8 | 3 | 97 | 2 | 98 | 24 | 0.5 | 0.0 31 | - 0.66 | 10.9 |
| Compa rativ e Examp le 9 | 2 | 98 | 3 | 97 | 25 | 0.5 | 0.0 30 | - 0.67 | 10.3 |
| Compa rativ e Example 10 | 2 | 98 | 2 | 98 | 26 | 0.5 | 0.0 80 | - 0.42 | 4.3 |
| Compa rativ e Examp le 11 | 3 | 97 | 3 | 97 | 24 | 0.5 | 0.0 32 | - 0.48 | 13.1 |
| F: Ferrite, B: Bainite, M: Martensite, TM: Tempered Martensite | | | | | | | | | |

**[Table 5]**

| Division | Yield Strength (MPa) | Tensile Strength (MPa) | Yield Ratio | Elongation (%) | Bendability (R/t) | Degreasing Rate (area%) | Phosphate Coverage (area%) |
|---|---|---|---|---|---|---|---|
| Inventive Example 1 | 1098 | 1525 | 0.72 | 6 | 2.5 | 97 | 98 |
| Inventive Example 2 | 1105 | 1515 | 0.73 | 7 | 2.5 | 98 | 98 |
| Inventive Example 3 | 1135 | 1531 | 0.74 | 6 | 2.5 | 97 | 97 |
| Comparative Example 1 | 1021 | 1424 | 0.72 | 7 | 4.3 | 98 | 76 |
| Comparative Example 2 | 1032 | 1465 | 0.70 | 5 | 3.9 | 99 | 79 |
| Comparative Example 3 | 1052 | 1459 | 0.72 | 6 | 4.3 | 97 | 74 |
| Comparative Example 4 | 1014 | 1401 | 0.72 | 4 | 3.9 | 98 | 97 |
| Comparative Example 5 | 1201 | 1547 | 0.78 | 6 | 2.5 | 99 | 87 |
| Comparative Example 6 | 1209 | 1542 | 0.78 | 6 | 2.5 | 97 | 89 |
| Comparative Example 7 | 1105 | 1532 | 0.72 | 6 | 3.9 | 56 | 86 |
| Comparative Example 8 | 1124 | 1524 | 0.74 | 6 | 4.3 | 53 | 85 |
| Comparative Example 9 | 1101 | 1539 | 0.72 | 6 | 3.6 | 51 | 83 |
| Comparative Example 10 | 1098 | 1524 | 0.72 | 6 | 3.2 | 32 | 74 |
| Comparative Example 11 | 1151 | 1531 | 0.75 | 6 | 3.2 | 45 | 81 |

As can be seen from Tables 1 to 5 above, it could be seen that Inventive Examples 1 to 3, which satisfy the alloy composition and manufacturing conditions proposed by the present disclosure, secure the mechanical properties and phosphate treatability targeted by the present disclosure.

In the case of Comparative Example 1, which does not satisfy the Mn content, the X value, and the Y/X value, it could be seen that the tensile strength, bendability, and phosphate treatability are insufficient because the microstructure and the number fraction having the KAM value of 0 to 1.0° are not secured.

In the case of Comparative Examples 2 and 3, which do not satisfy the Si content, the X value, and the Y/X value, it could be seen that the tensile strength, the bendability, and the phosphate treatability are insufficient because the microstructure and the number fraction having the KAM value of 0 to 1.0° are not secured.

In the case of Comparative Example 4, which does not satisfy the C content, the Cr content, the Mo content, and the Y value, it could be seen that the tensile strength and the bendability are insufficient because the microstructure and the number fraction having the KAM value of 0 to 1.0° are not secured.

In the case of Comparative Examples 5 and 6, which do not satisfy the Cr content, the X value, the Y value, and the Y/X value, it could be seen that the phosphate treatability is insufficient.

In the case of Comparative Example 7, which does not satisfy the cold reduction ratio, it could be seen that the bendability, the degreasing rate, and the phosphate treatability are insufficient because the surface roughness of the Ni coating layer and the C content of the C enrichment layer are not secured.

In the case of Comparative Example 8, which does not satisfy the surface roughness of the cold rolling roll, it could be seen that the bendability, the degreasing rate, and the phosphate treatability are insufficient because the surface roughness of the Ni coating layer and the C content of the C enrichment layer are not secured.

In the case of Comparative Example 9, which does not satisfy the temper rolling force, it could be seen that the bendability, the degreasing rate, and the phosphate treatability are insufficient because the surface roughness of the Ni coating layer and the C content of the C enrichment layer are not secured.

In the case of Comparative Example 10, which does not satisfy the Ni coating weight, it could be seen that the degreasing rate and the phosphate treatability are insufficient because the average thickness of the Ni coating layer is not secured.

In the case of Comparative Example 11, which does not satisfy the oil coating amount, it could be seen that the degreasing rate and the phosphate treatability are insufficient because the C content of the C enrichment layer is not secured.

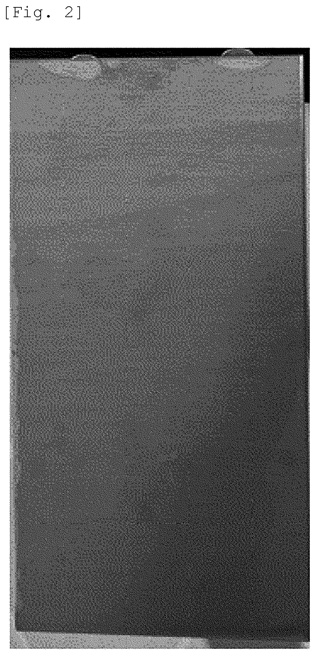

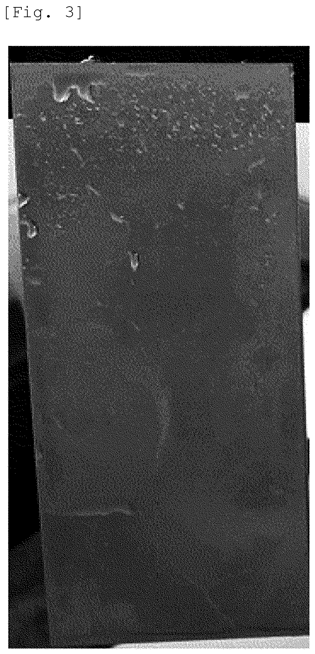

FIG. 2 is an image of Inventive Example 1 after degreasing, and FIG. 3 is an image of Comparative Example 10 after degreasing. As can be seen from FIGS. 2 and 3, Inventive Example 1 exhibits excellent degreasing properties, whereas Comparative Example 10 exhibits poor degreasing properties.

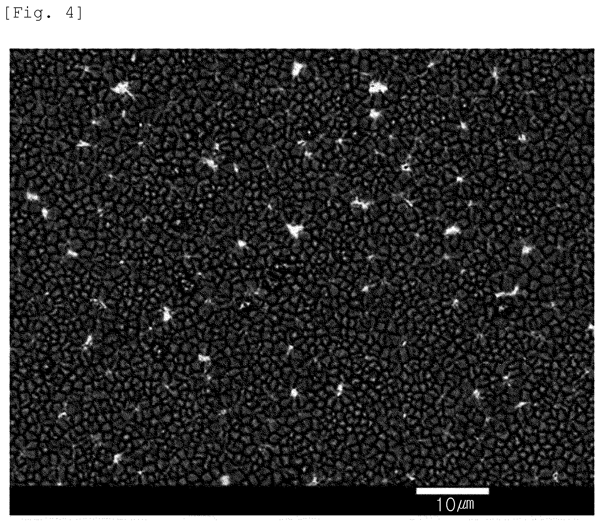

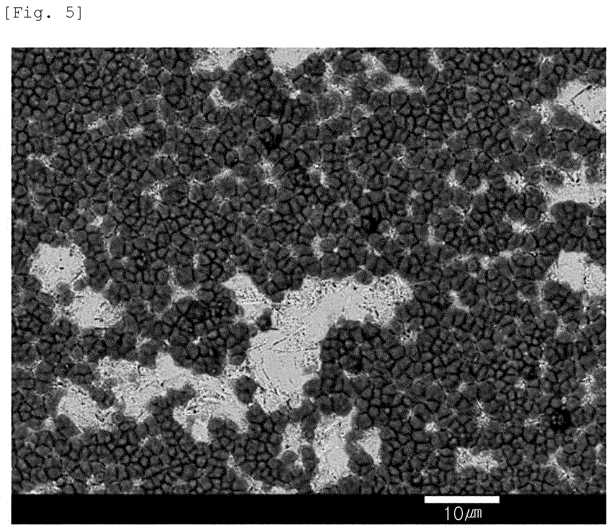

FIG. 4 is the scanning electron microscope (SEM) image of Inventive Example 1 after the phosphate treatment, and FIG. 5 is the scanning electron microscope (SEM) image of Comparative Example 11 after the phosphate treatment. As can be seen from FIGS. 4 and 5, Inventive Example 1 has excellent phosphate treatability, whereas Comparative Example 11 has poor phosphate treatability.

### [Description of Reference Characters]

100: Cold-rolled steel sheet
10: Base steel sheet
20: Ni coating layer
30: C enrichment layer

## Claims

1. A cold-rolled steel sheet, comprising:
a base steel sheet;
a Ni coating layer formed on the base steel sheet; and
a C enrichment layer formed on the Ni coating layer,
wherein the base steel sheet includes, by wt%, carbon (C): 0.190 to 0.270%, silicon (Si): 0.030 to 0.60%, manganese (Mn): 1.50 to 2.40%, chromium (Cr): 0.0050 to 0.50%, molybdenum (Mo): 0.0030 to 0.50%, boron (B): 0.00050 to 0.0050%, phosphorus (P): 0.030% or less (excluding 0%), sulfur (S): 0.00350% or less (excluding 0%), nitrogen (N): 0.010% or less (excluding 0%), aluminum (Al): 0.010 to 0.10%, niobium (Nb): 0.0030 to 0.050%, titanium (Ti): 0.0050 to 0.050%, and the balance being Fe and unavoidable impurities,
the Ni coating layer has an average thickness of 0.005 to 0.065 µm, and
the C enrichment layer has a C content of 0.5 to 10 wt%.

2. The cold-rolled steel sheet of claim 1, wherein the base steel sheet satisfies Relational Equations 1 to 3 below. [Relational Equation 1] $X = - 10 Si + 40 Mn - 80 Cr \geq 50$ [Relational Equation 2] 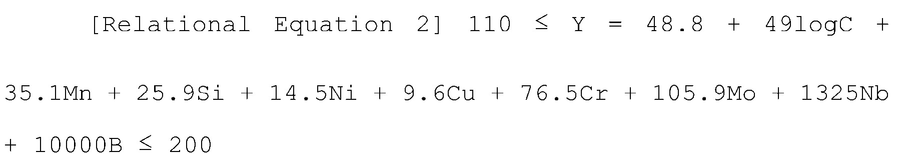 110 ≤ Y = 48.8 + 49logC + 35.1Mn + 25.9Si + 14.5Ni + 9.6Cu + 76.5Cr + 105.9Mo + 1325Nb + 10000B ≤ 200 [Relational Equation 3] $1.2 \leq Y / X \leq 3.7$ (However, the content of each alloying element in Relational Equations 1 to 3 above is in wt%).

3. The cold-rolled steel sheet of claim 1, wherein the base steel sheet includes:
a central portion; and
a surface layer portion formed on an outer side of the central portion in a thickness direction,
the microstructure of the central portion includes, in area %, a total of 5% or less (including 0%) of one or more of ferrite and bainite, and the balance being one or more of martensite and tempered martensite, and
the microstructure of the surface layer portion includes, in area %, a total of 10% or less (excluding 0%) of one or more of ferrite and bainite, and the balance being one or more of martensite and tempered martensite.

4. The cold-rolled steel sheet of claim 1, wherein, in the base steel sheet, upon measuring EBSD, when a number fraction of a region having a KAM value of 0 to 5.0° is set to 100%, a number fraction of a region having a KAM value of 0 to 1.0° at a 1/4 position in the thickness direction is set to 22 to 30%.

5. The cold-rolled steel sheet of claim 1, wherein the Ni coating layer has a surface roughness (Rsk) of -0.65 or more.

6. The cold-rolled steel sheet of claim 1, wherein an oxide layer including oxide having a long-axis length of 1.5 µm or less is formed between the base steel sheet and the Ni coating layer.

7. The cold-rolled steel sheet of claim 1, wherein the surface layer portion is a region extending from a surface of a steel material to 20 µm in a thickness direction.

8. The cold-rolled steel sheet of claim 1, wherein the cold-rolled steel sheet has a yield strength of 1000 to 1300 MPa, a tensile strength of 1470 to 1670 MPa, a yield ratio of 0.85 or less, and an elongation of 4 to 10%.

9. The cold-rolled steel sheet of claim 1, wherein the cold-rolled steel sheet has a bendability (R/t) of 3.5 or less.

10. The cold-rolled steel sheet of claim 1, wherein the cold-rolled steel sheet has a degreasing rate of 90% or more.

11. The cold-rolled steel sheet of claim 1, wherein the cold-rolled steel sheet has a phosphate coverage of 95 area% or more.

12. The cold-rolled steel sheet of claim 1, wherein the cold-rolled steel sheet further includes a plating layer between the Ni coating layer and the C enrichment layer.

13. A method of manufacturing a cold-rolled steel sheet, comprising:
heating a slab comprising, by wt%, carbon (C): 0.190 to 0.270%, silicon (Si): 0.030 to 0.60%, manganese (Mn): 1.50 to 2.40%, chromium (Cr): 0.0050 to 0.50%, molybdenum (Mo): 0.0030 to 0.50%, boron (B): 0.00050 to 0.0050%, phosphorus (P): 0.030% or less (excluding 0%), sulfur (S): 0.00350% or less (excluding 0%), nitrogen (N): 0.010% or less (excluding 0%), aluminum (Al): 0.010 to 0.10%, niobium (Nb): 0.0030 to 0.050%, titanium (Ti): 0.0050 to 0.050%, and the balance being Fe and unavoidable impurities;
obtaining a hot-rolled steel sheet by finish hot rolling the heated slab;
coiling the hot-rolled steel sheet;
cold rolling the coiled hot-rolled steel sheet with a cold reduction rate of 45 to 70% using a roll having a surface roughness (Ra) of 2.5µm or more to obtain a cold-rolled steel sheet;
continuously annealing the cold-rolled steel sheet;
primarily cooling the continuously annealed cold-rolled steel sheet;
secondarily cooling the primarily cooled cold-rolled steel sheet;
reheating the secondarily cooled cold-rolled steel sheet and then overaging-treating the cold-rolled steel sheet;
forming a Ni coating layer by plating Ni onto the overaging-treated cold-rolled steel sheet with a coating weight of 1 to 15 mg/m²;
temper-rolling the cold-rolled steel sheet formed with the Ni coating layer using a rolling force of 500 to 1000 tons;
tension leveling the temper-rolled cold-rolled steel sheet; and
applying oil to both surfaces of the tension-leveled cold-rolled steel sheet such that a total amount is 500 to 1500 mg/m².

14. The method of claim 13, wherein the slab satisfies Relational Equations 1 to 3 below. [Relational Equation 1] $X = - 10 Si + 40 Mn - 80 Cr \geq 50$ [Relational Equation 2] 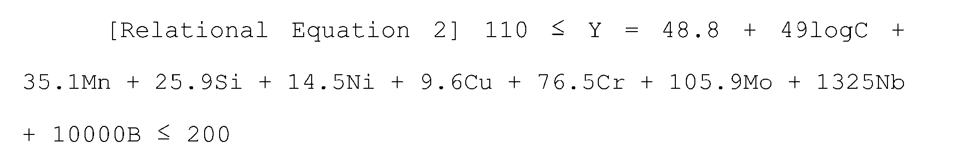 110 ≤ Y = 48.8 + 49logC + 35.1Mn + 25.9Si + 14.5Ni + 9.6Cu + 76.5Cr + 105.9Mo + 1325Nb + 10000B ≤ 200 [Relational Equation 3] $1.2 \leq Y / X \leq 3.7$ (However, the content of each alloying element in Relational Equations 1 to 3 above is in wt%).

15. The method of claim 13, wherein the heating of the slab is performed at 1100 to 1300°C.

16. The method of claim 13, wherein the finish hot rolling is performed at Ar3 to Ar3+120°C.

17. The method of claim 13, wherein the coiling is performed at Ms to 600°C.

18. The method of claim 13, wherein the continuous annealing is performed at Ac3+20°C to Ac3+80°C.

19. The method of claim 13, wherein the continuous annealing is performed for 30 to 230 seconds.

20. The method of claim 13, wherein, during the primary cooling, a primary cooling end temperature is controlled to 670 to 750°C and the primary cooling is performed at an average cooling rate of 1 to 6°C/s.

21. The method of claim 13, wherein, during the secondary cooling, a secondary cooling end temperature (Tf) is controlled to 110 to 300°C and the secondary cooling is performed at an average cooling rate of 30 to 300°C/s.

22. The method of claim 13, wherein, during the secondary cooling, Mf-secondary cooling end temperature (Tf) is controlled to be 130°C or lower.

23. The method of claim 13, wherein, during the overaging treatment, an overaging treatment temperature (H) is controlled to 100 to 250°C and the overaging treatment is performed for 5 to 12 minutes.

24. The method of claim 13, wherein, during the overaging treatment, the overaging treatment temperature (H) - secondary cooling end temperature (Tf) is controlled to be 100°C or lower.

25. The method of claim 13, wherein the tension leveling is performed with an elongation of 0.01 to 0.50%.

26. The method of claim 13, further comprising:
after the tension leveling, forming a plating layer on at least one surface of the cold-rolled steel sheet.
